## Europäisches Patentamt

## European Patent Office

## Office européen des brevets

(11) Veröffentlichungsnummer : **0 443 003 B1**

(12) **EUROPÄISCHE PATENTSCHRIFT**

(45) Veröffentlichungstag der Patentschrift :
15.03.95 Patentblatt 95/11

(51) Int. Cl.⁶ : **H04L 12/40**

(21) Anmeldenummer : **90913481.9**

(22) Anmeldetag : **10.09.90**

(86) Internationale Anmeldenummer :
**PCT/EP90/01525**

(87) Internationale Veröffentlichungsnummer :
**WO 91/03897 21.03.91 Gazette 91/07**

(54) **KANALZUGRIFFSVERFAHREN FÜR EIN ALS BUS-SYSTEM KONFIGURIERTES LOKALES ÜBERTRAGUNGSNETZ.**

(30) Priorität : **11.09.89 DE 3930316**

(73) Patentinhaber : **Görg, Carmelita**
**Laurentiusstrasse 30**
**D-52072 Aachen (DE)**

(43) Veröffentlichungstag der Anmeldung :
**28.08.91 Patentblatt 91/35**

(72) Erfinder : **GÖRG, Carmelita**
**Laurentiusstrasse 30**
**D-5100 Aachen (DE)**
Erfinder : **SCHMICKLER, Leonhard**
**Republikplatz 5**
**D-5100 Aachen (DE)**
Erfinder : **SCHOLTEN, Klaus**
**Bismarckstrasse 39**
**D-71116 Gärtringen (DE)**
Erfinder : **SCHREIBER, Friedrich**
**Im Brand 71**
**D-5108 Monschau (DE)**

(45) Bekanntmachung des Hinweises auf die
Patenterteilung :
**15.03.95 Patentblatt 95/11**

(84) Benannte Vertragsstaaten :
**AT CH DE ES FR GB IT LI NL SE**

(56) Entgegenhaltungen :
**IBM TECHNICAL DISCLOSURE BULLETIN, Bd. 24, Nr. 11B, April 1982, IBM CORP., New York, US; D.F. BANTZ: "Continuation packet protocol", Seiten 5805-5808**

(74) Vertreter : **Schaumburg, Thoenes & Thurn**
**Mauerkircherstrasse 31**
**D-81679 München (DE)**

## Beschreibung

Die Erfindung betrifft ein Kanalzugriffsverfahren für ein als Bussystem konfiguriertes lokales Übertragungsnetz für Nachrichten mit Paketeinteilung ohne zentrale Steuerung, bei dem jede sendewillige Station den Übertragungskanal abhört und abhängig vom Zustand des Übertragungskanals ihre Nachricht absetzt, und bei dem im Falle einer Kollision von Nachrichten auf dem Übertragungskanal eine Unterbrechung der Nachrichtenübertragung und eine Kollisionsauflösung in einer Auflösungsphase erfolgt.

Bei einem derartigen Verfahren für Netzwerkzugang ist es das grundlegende Prinzip, daß jede sendewillige Station spontan auf den Übertragungskanal zugreifen kann. Dabei müssen Kollisionen möglichst vermieden werden. Jede Station, die eine Nachricht auszusenden hat, prüft den Übertragungskanal darauf, ob er besetzt oder frei ist. Ist er frei, so wird die Nachricht abgesetzt. Kommt es dabei zu einer Kollision, weil ein anderer Teilnehmer, der den Übertragungskanal ebenfalls geprüft und frei vorgefunden hat, gleichzeitig sendet, so wird diese Kollision erkannt, und beide Stationen wiederholen ihren zunächst vergeblichen Versuch, wobei durch aktivierte Zufallsgeneratoren eine zufällige Zeitverschiebung bei beiden beteiligten Stationen eingeführt werden kann. Es wird daher mit großer Wahrscheinlichkeit anschließend nur jeweils eine Nachricht auf den Übertragungskanal gegeben. Für diese Art der Nachrichtenübertragung ist stets ein sogenanntes Übertragungsprotokoll maßgebend. Das bekannteste ist das sogenannte CSMA/CD-Verfahren (carrier sense multiple access with collision detection).

Jede Station des Nachrichtenübertragungsnetzes muß zu ihrer Steuerung gemäß dem vorgegebenen Übertragungsprotokoll eine Steuereinheit enthalten, wodurch gewährleistet wird, daß alle Stationen gleichartig arbeiten. Bei dem eingangs beschriebenen Kanalzugriffsverfahren kann sich bei hoher Belastung des Übertragungskanals durch dann häufigere Kollisionen die Effizienz des Gesamtsystems verschlechtern, was durch eine längere mittlere Datentransferzeit in Erscheinung tritt. Mit der Einführung neuer Datenübertragungsdienste mit grossen Informationsmengen, z.B. Zugriff zu verteilten Speichern oder Bildübertragung, wird die Belastung der Nachrichtenübertragungsnetze höher. Üblicherweise liegt die Grundlast in einem Datennetz unter 10 %, jedoch treten mit ständig steigendem Verkehrsaufkommen zunehmend auch Lastspitzen im Bereich von 30 bis 40 % und mehr auf. Infolgedessen besteht die Gefahr einer Überlastung sowie unzumutbarer Anwortzeiten für die Benutzer.

Man hat bereits versucht, die Zahl der Kollisionen, die bei einem Verfahren eingangs genannter Art zwangsläufig auftreten, dadurch zu verringern, daß man besonders günstige Algorithmen zur Kollisionsauflösung entwickelt hat.

Auch wurden zum Verkürzen der Datentransferzeit bei der Datenübertragung in Paketübertragungsnetzen Prioritäten zur Diskussion gestellt, wobei die Pakete in jeder Paketvermittlungseinrichtung nach ihrer Länge sortiert und kurze Pakete bevorzugt übertragen werden. Dabei wurden aber nur kollisionsfreie Systeme mit zentraler Steuerung in Betracht gezogen und keine wesentlichen Verbesserungen erzielt, weil die Paketlängen nur relativ schwach streuen.

Die Erfindung geht von der Überlegung aus, daß Maßnahmen zur Kollisionsauflösung allein nicht wesentlich zu einer entscheidenden Verbesserung der mittleren Transferzeit beitragen können, solange nicht dafür gesorgt wird, daß die Zahl aufzulösender Kollisionen minimal gehalten wird. Dies kann aber nur durch eine Optimierung des Kanalzugriffsverfahrens selbst geschehen.

Demgemäß ist es Aufgabe der Erfindung, ein Kanalzugriffsverfahren für ein verteiltes System ohne zentrale Steuerung anzugeben, bei dem die Zahl möglicher Kollisionen verringert ist und gleichzeitig die mittlere Transferzeit verkürzt wird.

Ein Verfahren eingangs genannter Art ist zur Lösung dieser Aufgabe erfindungsgemäß derart ausgebildet, daß die Nachrichten in einer der zunehmenden Restlänge bzw. Restausgabezeit entsprechenden Reihenfolge übertragen werden, und daß die mit Ende einer Kollision beginnende Auflösungsphase aus gegebenenfalls mehreren Zeitabschnitten besteht, in denen jeweils die Übertragung für die Pakete von Nachrichten vorbestimmter Restlänge bzw. Restausgabezeit freigegeben wird.

Ausgangspunkt für diese Lösung der gestellten Aufgabe ist die Beobachtung, daß in den meisten lokalen Nachrichtenübertragungsnetzen die Nachrichtenlänge stark streut. Durch Zurückhalten langer Nachrichten in einer Station, wenn gerade eine kurze Nachricht übertragen wird, können Kollisionen auf dem Übertragungskanal nur noch dann auftreten, wenn während der Übertragung dieser Nachricht eine noch kürzere Nachricht in einer Station eintrifft und von dieser wegen ihrer Kürze bevorzugt übertragen werden soll. Dies bedeutet, daß die Zahl möglicher Kollisionen wesentlich geringer als bei dem eingangs genannten allgemeinen Verfahren ist. Durch das Aufteilen der Kollisions-Auflösungsphase in gegebenenfalls mehrere Zeitabschnitte, in denen jeweils nur Nachrichten vorbestimmter Restausgabezeit übertragen werden können, erfolgt ein automatisches Sortieren der kollidierten Nachrichten, so daß nochmalige Kollisionen praktisch ausgeschlossen sind.

In vielen Anwendungsfällen der Erfindung kann es vorteilhaft sein, wenn die in der jeweiligen Station vorliegenden Nachrichten hinsichtlich ihrer Restlänge bzw. Restausgabezeit geordnet werden. Dadurch kann die Handhabung der zu übertragenden Nachrichten in der Station erleichtert werden.

Das Verfahren nach der Erfindung ist besonders vorteilhaft derart ausgebildet, daß zur Darstellung der Restlänge bzw. Restausgabezeit die Pakete einer jeden Nachricht fortlaufend mit einer Restpaketnummer versehen werden, die die Zahl der insgesamt noch zu übertragenden Pakete dieser Nachricht angibt. Ein solches Vorgehen wurde bereits allgemein vorgeschlagen, jedoch nur für mehrere in einer Station parallel zur Übertragung anstehende Nachrichten und nicht im Zusammenhang mit dem vorstehend erläuterten erfindungsgemäßen Verfahren. Hier bringt es besondere Vorteile, denn durch diese Art der Numerierung der zu übertragenden Pakete einer jeden Nachricht ergibt sich ein besonders einfaches Auswerten übertragener Nachrichten beim Abhören des Übertragungskanals und zur Übertragung anstehender Nachrichten in den einzelnen Stationen. Die Restpaketnummer ist der Restausgabezeit der jeweiligen Nachricht und damit deren Restlänge direkt proportional.

Dabei kann das Verfahren besonders günstig so durchgeführt werden, daß bei Feststellen einer laufenden Übertragung durch eine sendewillige Station die in dieser Station vorliegende Nachricht abgesetzt wird, sofern deren Restpaketnummer kleiner als die Restpaketnummer des nächsten erwarteten Pakets der laufenden Übertragung ist. Durch die Anwendung der Restpaketnummern ist es nämlich besonders einfach, in einer den Übertragungskanal überwachenden sendewilligen Station die Restpaketnummer des von einer anderen Station gerade übertragenen Pakets einer Nachricht festzustellen und aus dieser die nächstfolgende, also die erwartete Restpaketnummer zu berechnen. Wenn diese größer als die Restpaketnummer der in der überwachenden, sendewilligen Station vorliegenden Nachricht ist, so wird diese Nachricht ohne Rücksicht auf das im Rahmen der laufenden Übertragung zu erwartende nächste Paket auf den Übertragungskanal abgesetzt, so daß eine Kollision beider Nachrichtenpakete provoziert wird. Die zeitliche Steuerung dieses Vorgangs erfolgt dabei gemäß Voraussetzung derart, daß das Absetzen der Nachricht beginnt, wenn die laufende Übertragung eines Nachrichtenpakets abgeschlossen ist, denn die sendewillige Station setzt ihre Nachrichten prinzipiell nur dann ab, wenn der Übertragungskanal frei ist. Dies ist in den Zeitzwischenräumen zwischen zu übertragenden Nachrichtenpaketen stets der Fall.

Wenn nun eine Kollision in beschriebener Weise auf dem Übertragungskanal provoziert wurde, so beginnt mit ihrem Ende stets die Auflösungsphase, in der das Übertragungsrecht zuerst an diejenige an der Kollision beteiligte Station vergeben wird, die das Paket mit der kleinsten Restpaketnummer senden will.

In weiterer Ausbildung des Erfindungsgedankens kann das Verfahren so realisiert werden, daß die Zeitabschnitte der Auflösungsphase mehreren Bereichen von Restpaketnummern zugeordnet sind. Somit muß nicht für jede mögliche Restpaketnummer ein eigener Zeitabschnitt der Auflösungsphase vorgesehen sein, sondern es genügen mehrere, jedoch wenige Bereiche, um die vorhandenen Kollisionen aufzulösen.

Bei der vorstehend erläuterten Weiterbildung der Erfindung kann der erste Zeitabschnitt nur der Restpaketnummer 1 zugeordnet sein. Dies ist vorteilhaft, wenn häufig nur aus einem Paket bestehende Nachrichten zu übertragen sind.

Die Zahl der Zeitabschnitte der Auflösungsphase und/oder die Obergrenze des jeweiligen Bereichs von Restpaketnummern kann entsprechend der Verkehrslast des Übertragungsnetzes eingestellt werden. Dies bedeutet eine Anpassungsmöglichkeit der Auflösung von Kollisionen an den jeweils herrschenden Verkehr auf dem Übertragungsnetz und eine Optimierung der in dem Übertragungsnetz sich ergebenden Transferzeiten.

Ebenso können die Zahl der Zeitabschnitte der Auflösungsphase und/oder die Obergrenze des jeweiligen Bereichs von Restpaketnummern abhängig von der Paketnummer des jeweils letzten störungsfrei übertragenen Pakets eingestellt werden. Diese Art der Anpassung der Auflösung von Kollisionen an die Restnachrichtenlänge führt gleichfalls zu einer Optimierung der Transferzeiten.

Ähnlich kann es vorteilhaft sein, wenn die Unterbrechung der Nachrichtenübertragung nur für Nachrichten mit einer vorbestimmten Mindest-Restnachrichtenlänge bzw. Mindest-Restausgabezeit erfolgt. Es kann nämlich z.B. bei bestimmter Verkehrslast des Übertragungsnetzes möglicherweise die mit der Erfindung erzielbare Verkürzung der Transferzeiten schon bei Anwendung auf die längeren Nachrichten ausreichen und bei kürzeren Nachrichten keine wesentliche Verbesserung im Verhältnis zum Aufwand bewirken.

Schließlich ist es bei Anwendung der Erfindung auch von Vorteil, wenn nach der erfolgreichen Übertragung eines Nachrichtenpakets ein Kanalzugriff unabhängig von der Restlänge bzw. Restausgabezeit dieser Nachricht erfolgt, wenn der Übertragungskanal für eine vorbestimmte Zeit unbelegt bleibt. Dadurch wird die Nutzung des Übertragungskanals auch dann gewährleistet, wenn eine Station zwar eine Nachricht absetzen darf, jedoch infolge eines Fehlers nicht sendet.

Die Erfindung wird im folgenden anhand der Zeichnung näher erläutert. Darin zeigen:

Fig. 1       Die allgemeine Darstellung eines verteilten Nachrichtenübertragungsnetzes ohne zentrale Steuerung,

Fig. 2       eine schematische Darstellung eines Kanalzugriffs in einem Paket-Nachrichtenübertragungsnetz ohne Kollision,

Fig. 3      eine schematische Darstellung ähnlich Fig. 2, jedoch mit einem Kollisionsvorgang,

Fig. 4      die schematische Darstellung mehrerer Kollisionsvorgänge in einem erfindungsgemäßen Verfahren,

Fig. 5      eine Blockdarstellung der Steuereinheit einer Station, die nach dem erfindungsgemäßen Verfahren arbeitet,

Fig. 6      eine Übersicht der wichtigsten Bestandteile einer Steuervorrichtung in der in Fig. 5 gezeigten Steuereinheit,

Fig. 7, 8, 9 und 10      das Flußdiagramm eines Funktionsablaufs in einer Station, die nach dem erfindungsgemäßen Kanalzugriffsverfahren arbeitet, und

Fig. 11      eine graphische Darstellung zur Erläuterung der mit der Erfindung erzielbaren Verkürzung der mittleren Transferzeiten.

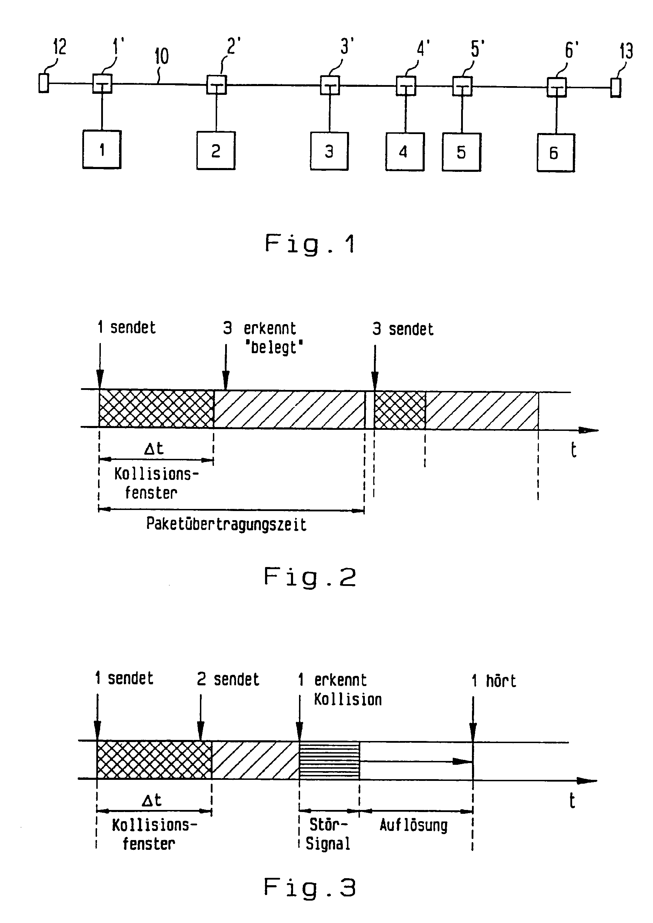

In Fig. 1 ist ein verteiltes Nachrichtenübertragungsnetz ohne zentrale Steuerung dargestellt, das eine Busstruktur hat und in einem lokalen Entfernungsbereich eingesetzt wird. Es ist ein Bus 10 vorgesehen, der als ein allen Stationen 1 bis 6 gemeinsam zugänglicher Übertragungskanal dient und einen passiven Nachrichtentransport vornimmt. Dies bedeutet, daß jede Sendung ohne jegliche Aktion der nicht betroffenen Stationen alle ihre Adressaten erreicht und daß Verzögerungszeiten infolge fehlenden Datendurchganges in der einzelnen Station entfallen. Die einzelnen Stationen 1 bis 6 sind an den Bus 10 jeweils über einen Sendeempfänger 1' bis 6' angeschlossen. Der Bus 10 kann beispielsweise ein Mehrfachleitungssystem, ein Koaxialkabel oder ein Lichtleiter sein. Der Bus 10 ist an seinem Anfang und an seinem Ende jeweils mit einem Abschlußwiderstand 12 bzw. 13 abgeschlossen.

Zunächst wird zum besseren Verständnis an Hand der Fig. 2 und 3 der Kanalzugriff ohne und mit Kollision nach dem bekannten CSMA/CD-Protokoll erläutert.

In Fig. 2 ist schematisch in Abhängigkeit von der Zeit t ein Kanalzugriff durch die Station 3 dargestellt, wie er gemäß bekannter Technik durchgeführt wird. In dem in Fig. 2 gezeigten Fall tritt keine Kollision auf. Das Signal der Station 1 erreicht die Station 3, bevor diese einen Sendewunsch hat. Sobald ein solcher auftritt, erkennt die Station 3 den Belegtzustand des Bus 10, so daß sie die bei ihr vorliegenden Nachrichten nicht absetzt. Es ist auch ein Kollisionsfenster $\Delta t$ dargestellt, das kürzer als die Paketübertragungszeit ist. Dieses entspricht der Signallaufzeit von der Station 1 zu der Station 3, in der diese den Bus 10 noch als frei erkennt, obwohl die Station 1 bereits sendet. Würde die Station 3 während dieser Zeit die in ihr vorliegenden Nachrichten absetzen, so würde eine Kollision entstehen und durch die Station 1 erkannt. Dies ist aber für den in Fig. 2 gezeigten Fall nicht vorgesehen, denn die Station 3 beginnt ihr Abhören zu einem späteren Zeitpunkt als das Kollisionsfenster $\Delta t$, erkennt den Besetztzustand des Bus 10 und sendet deshalb die in ihr vorliegenden Nachrichten erst nach der Paketübertragungszeit.

In Fig. 3 ist ein Kanalzugriff dargestellt, bei dem eine Kollision auftritt. Die Station 1 befindet sich im Sendezustand und hört den Bus 10 ab. Die Station 2 sendet innerhalb des Kollisionsfensters $\Delta t$, weil sie bereits zu diesem Zeitpunkt sendebereit ist und den Bus 10 abhört, die Nachricht der Station 1 aber noch nicht empfängt. Die Station 1 erkennt die Kollision später, wenn die Nachricht der Station 2 bei ihr eintrifft, und sendet infolgedessen ein Störungssignal aus, mit dem alle Stationen, die an den Bus 10 angeschlossen sind, darüber informiert werden, daß eine Kollision vorliegt, so daß sie nicht mehr auf den Bus 10 zugreifen können. Die Auflösung dieser Kollision erfolgt in einer Auflösungsphase anschließend an das Störsignal nach einem der bekannten Auflösungs-Algorithmen. Anschließend ist als Beispiel dargestellt, daß die Station 1 wieder den Bus abhört, um ihn auf Besetzt- oder Freizustand zu prüfen.

In einem CSMA/CD-System kann jede Station normalerweise nach dem Ende einer Übertragung und einem vorgegebenen Paketabstand ihre Übertragung starten, sofern sie den Freizustand des Bus feststellt. Dabei können, wie vorstehend erläutert, besonders bei hoher Netzbelastung viele Kollisionen auftreten, die die Systemleistung wesentlich herabsetzen, weil die Transferzeiten im Mittel deutlich erhöht sind.

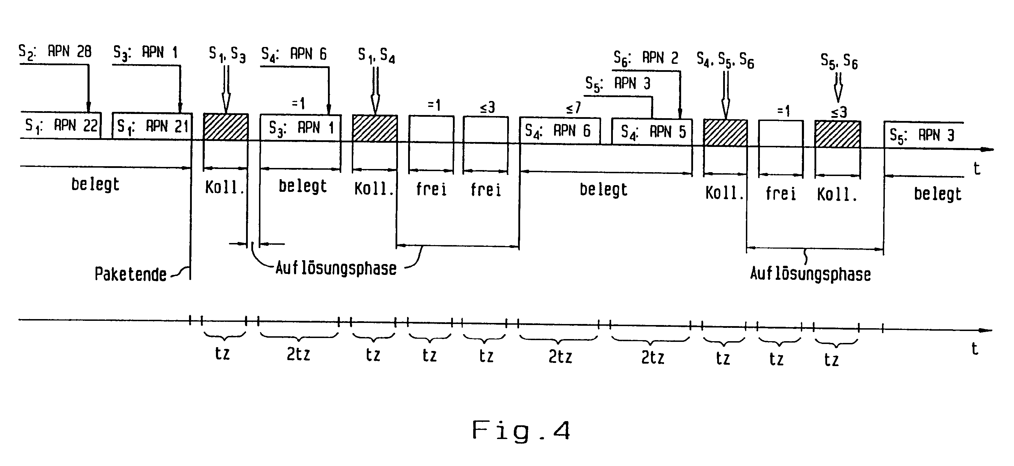

Unter Bezugnahme auf Fig. 4 wird nun die beispielweise Anwendung der Erfindung auf ein System dieser Art erläutert. Hierbei sei vorausgesetzt, daß in jedes Nachrichtenpaket eine Restpaketnummer eingetragen ist, die der Länge des noch nicht gesendeten Nachrichtenabschnitts proportional ist. Das Feststellen der Restpaketnummer eines von einer Station übertragenen Pakets ermöglicht jeder anderen Station die Entscheidung, ob sie eine Kollision provozieren darf oder nicht. Wenn die Restpaketnummer in einer solchen Station größer oder gleich der nächsten von der gerade sendenden Station zu erwartenden Restpaketnummer ist, die von jeder sendewilligen Station berechnet werden kann, so wird nicht auf den Bus zugegriffen. Die sendende Station kann ihr nächstes Paket also übertragen. Dadurch werden Kollisionen vermieden. Ist die Restpaketnummer in der sendewilligen Station aber kleiner als die nächste von der sendenden Station zu erwartende Restpaketnummer, so startet die sendewillige Station ihre Übertragung nach dem vorgegebenen Paketabstand, und es tritt eine Kollision auf. Während einer Auflösungsphase, die mit dieser provozierten Kollision beginnt, sind Zeitabschnitte für den Start der Übertragung von Paketen mit jeweils vorbestimmten Bereichen von Restpaketnummern reserviert. Wenn in einem der Zeitabschnitte mehrere Stationen die Übertragung starten können, so kann dann ein Auflösungs-Algorithmus zum Lösen entstehender Kollisionen benutzt werden.

Im folgenden werden diese Vorgänge an Hand eines Beispiels erläutert. Die in Fig. 4 gezeigten, nach unten gerichteten Pfeile kennzeichnen das Eintreffen einer neuen Nachricht mit einer Restpaketnummer RPN an einer Station $S_n$. Die Doppelpfeile kennzeichnen einen Übertragungsversuch von mehr als einer Station in ein und demselben Zeitschlitz tz. Die Zeitschlitze tz bzw. 2tz werden in jeder Station $S_n$ durch einen Zeitgenerator erzeugt, der nach jeder erfolgreichen Übertragung und nach jeder Kollision neu gestartet wird. Da alle Stationen $S_n$ den Bus abhören, werden alle Zeitgeneratoren jeweils gleichzeitig gestartet.

Fig. 4 zeigt zu Beginn der zeitlichen Darstellung, daß während der Übertragung eines Pakets mit RPN = 22 von der Station $S_1$ eine Nachricht mit RPN = 28 an der Station $S_2$ zum Übertragen eintrifft. Die Station $S_2$ stellt RPN = 22 auf dem Bus fest und erhält keinen Kanalzugriff nach dem Paketabstand, da ihre RPN = 28 größer als RPN = 21 ist, die als nächste von der Station $S_1$ zu erwarten ist. Eine Kollision wird vermieden. Während die Station $S_1$ das Paket RPN = 21 überträgt, trifft bei der Station $S_3$ eine Nachricht ein, die aus einem einzigen Paket besteht und daher RPN = 1 hat. Deshalb provoziert die Station $S_3$ eine Kollision nach Ende der laufenden Übertragung des Pakets mit RPN = 21 der Station $S_1$. Es kollidieren also zwei Pakete mit RPN = 20 von Station $S_1$ und RPN = 1 von Station $S_3$.

Bei Feststellen dieser Kollision speichern alle Stationen des Systems RPN = 20 des nächsten von der Station $S_1$ zu erwartenden Pakets. Die Kollision bewirkt den Start einer Auflösungsphase, die mit einem Zeitabschnitt beginnt, welcher für Pakete mit RPN = 1 reserviert ist. In diesem Beispiel startet also die Station $S_3$ die Übertragung ihrer Nachricht, die aus einem einzigen Paket besteht.

Während der Übertragung von der Station $S_3$ aus trifft eine zu übertragende Nachricht mit RPN = 6 in der Station $S_4$ ein. Nach dem Feststellen des Paketendes mit RPN = 1 haben nur Stationen, in denen eine Nachricht mit RPN $\leqq$ 20 vorliegt, einen Zugriff zum Bus. Dieser Zustand wird durch die Stationen $S_1$ und $S_4$ wahrgenommen, und es tritt wieder eine Kollision auf.

Nun sind die ersten beiden Zeitabschnitte der so hervorgerufenen Auflösungsphase unbesetzt, da keine Nachricht mit RPN = 1 oder RPN $\leqq$ 3 vorliegt. Im dritten Zeitschlitz nach der Kollision startet die Station $S_4$ erfolgreich die Übertragung des Pakets mit RPN = 6.

Danach treffen, während die Station $S_4$ ihr Paket mit RPN = 5 sendet, zwei kurze Nachrichten mit RPN = 3 und RPN = 2 in den Stationen $S_5$ und $S_6$ ein. Nach dem Paket mit RPN = 5 tritt eine Kollision zwischen den Stationen $S_4$, $S_5$ und $S_6$ auf. Nach dem ersten unbesetzten Zeitabschnitt der anschließenden Auflösungsphase kollidieren wiederum die Nachrichten der Stationen $S_5$ und $S_6$, weil ihre RPN $\leqq$ 3 ist. Diese Stationen nutzen einen Auflösungsalgorithmus, und die Station $S_5$ überträgt das Paket mit RPN = 3. Alle Stationen im Netzwerk haben die Restpaketnummern der letzten Kollision während der Auflösungsphase gespeichert. Sie beobachten die Aktivitäten auf dem Bus und vergleichen die gespeicherten Restpaketnummern mit den Restpaketnummern der Nachrichten, die bei ihnen selbst zum Übertragen vorliegen und entscheiden dementsprechend, ob sie eine Übertragung beginnen.

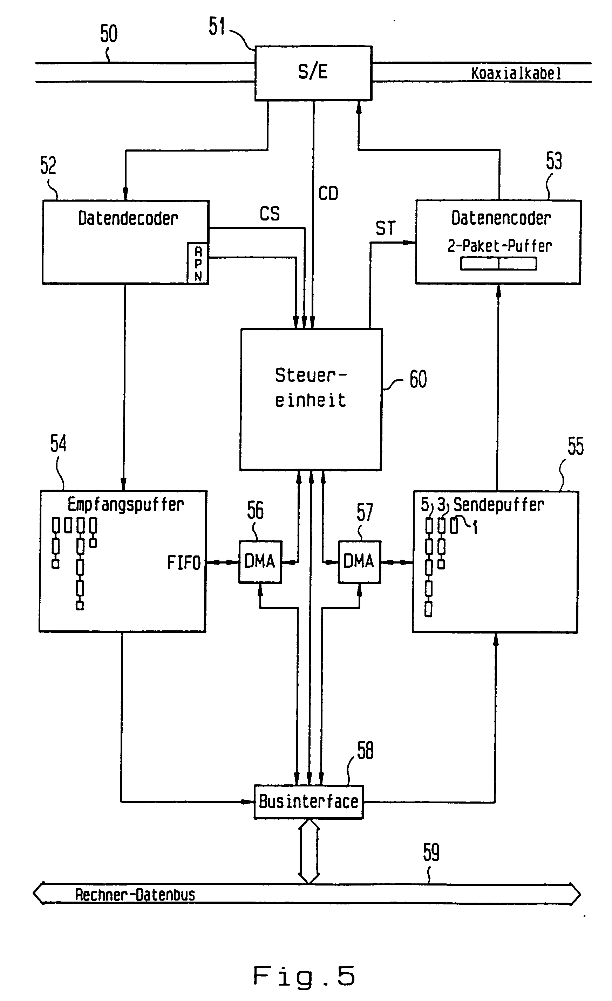

Fig. 5 zeigt die wichtigsten Teile der Steuerung einer jeden an einen Bus 50 angeschlossenen Station. Dazu gehören ein Sendeempfänger 51, ein Datendecoder 52, ein Datenencoder 53, ein Empfangspufferspeicher 54, ein Sendepufferspeicher 55, Speicherzugriffsschaltungen 56 und 57 sowie eine Schnittstelle 58, über die die hier betrachtete Station an einen Rechner-Datenbus 59 angeschlossen ist. Es sind ferner Signalwege dargestellt, über die die vorstehend genannten Einheiten untereinander verbunden sind und in Wechselwirkung stehen. Wichtigster Bestandteil ist dabei eine Steuereinheit 60, deren Aufbau im nachfolgenden noch näher erläutert wird.

Zunächst wird beschrieben, wie die in Fig. 5 gezeigten Funktionseinheiten miteinander in Wechselwirkung stehen, wenn ein Kanalzugriff nach dem erfindungsgemäßen Verfahren durchgeführt wird.

Wenn in der in Fig. 5 betrachteten Station eine Nachricht zur Übertragung vorliegt, so wird sie in hier nicht dargestellter, aber an sich bekannter Weise in einzelne Pakete zerlegt, die mit der Speicherzugriffsschaltung 57 von der Steuereinheit 60 aus als eine verkettete Liste in den Sendepuffer 55 eingeschrieben werden. Dabei hat jedes Paket eine Restpaketnummer RPN, die z.B. in sein Kopffeld eingetragen ist. Längere Paketketten haben in ihrem ersten Paket eine größere Restpaketnummer, kürzere Paketketten eine kleinere Restpaketnummer. In dem jeweils ersten Paket der in Fig. 5 im Sendepuffer 55 beispielsweise dargestellten Paketketten stehen die Restpaketnummern 5, 3 und 1. Die zum Verwalten und Sortieren des Sendepuffers 55 notwendige Zeit soll den Sendebetrieb der Station nicht beeinträchtigen. Um dies zu gewährleisten, wird das im folgenden erläuterte Prinzip eingesetzt.

Signalisiert der über den Rechner-Datenbus 59 angeschlossene Rechner der Steuereinheit 60, daß eine weitere Nachricht übertragen werden soll, so liest die Steuereinheit 60 diese Nachricht aus dem Speicher des Rechners und trägt sie in den Sendepuffer 55 an dem ihrer Länge entsprechenden Platz ein. Bei gleicher Länge mehrerer Nachrichten entscheidet die zeitliche Reihenfolge. Die ersten beiden Pakete des Sendepuffers 55 werden in den Datenencoder 53 geladen. Dies sind die beiden Pakete mit der niedrigsten Restpaketnummer, also hier mit der Restpaketnummer 1 und 3. Der Datenencoder 53 ist dabei so organisiert, daß das erste dieser beiden Pakete, also das Paket mit der Restpaketnummer 1, nicht mehr von einem anderen Paket verdrängt werden kann. Dies ist sinnvoll, damit ein sofortiger Zugriff auf den freiwerdenden Kanal zu jedem Zeitpunkt möglich ist. Nur wenn das erste Paket im Datenencoder 53 sich nicht bereits in der Übertragungsphase befindet, kann das zweite dort vorhandene Paket durch das einer neu im Sendepuffer 55 eintreffenden Nachricht verdrängt werden, die eine kleinere Restpaketnummer als die bereits im Sendepuffer 55 gespeicherte Nachricht hat. Dadurch ist es möglich, Verwaltungsoperationen in der in Fig. 5 gezeigten Steuerung durchzuführen, ohne den ggf. freien Bus 50 ungenutzt zu lassen. Erfolgreich übertragene Nachrichtenpakete werden aus dem Sendepuffer 55 entfernt.

Der Datendecoder 52 muß ein jeweils über den Bus 50 empfangenes Nachrichtenpaket auswerten. Wird in dessen Zieladressfeld die eigene Adresse gelesen, so wird das jeweils empfangene Nachrichtenpaket in den Empfangspuffer 54 eingeschrieben. Dieser Vorgang erfolgt über den Datendecoder 52, der neben dieser Funktion auch die Restpaketnummer eines jeden empfangenen Pakets auswertet und sie an die Steuereinheit 60 weitergibt.

Der Datendecoder 52 gibt ferner ein Kriterium CS an die Steuereinheit 60. Dieses betrifft die Feststellung eines Nachrichtenpakets (carrier sense). Von dem Sendeempfänger 51 wird an die Steuerung 60 ein Kriterium CD übermittelt, das den Zustand einer Nachrichtenkollision kennzeichnet (collision detection), der bereits in dem Sendeempfänger 51 festgestellt wird.

Der Datendecoder 52 informiert also die Steuereinheit 60 zu jedem Zeitpunkt über die Aktivitäten anderer Stationen, die auf dem Bus 50 ablaufen.

Der Empfangspuffer 54 ist über die Speicherzugriffsschaltung 56 mit der Steuereinheit 60 verbunden. Ferner ist er über die Schnittstelle 58 mit dem Rechner-Datenbus 59 verbunden, so daß die in ihm gespeicherten Nachrichten von der Steuereinheit 60 gelesen und über die Schnittstelle 58 und den Datenbus 59 an den angeschlossenen Rechner übertragen werden können. Dieser kann sie dann hinsichtlich ihres Steuer- und Informationsinhalts auswerten.

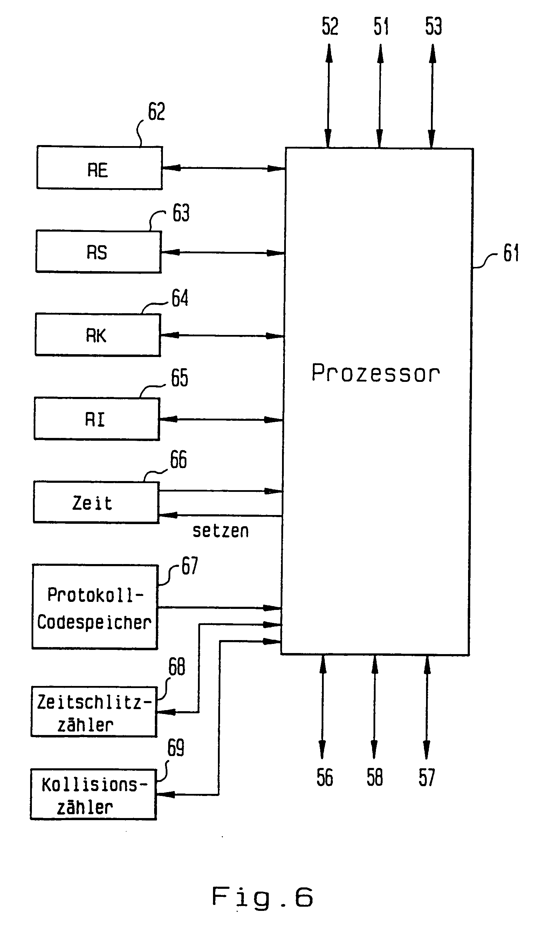

In Fig. 6 ist eine Übersicht der wichtigsten Bestandteile der Steuereinheit 60 dargestellt, die zu der in Fig. 5 gezeigten Steuerung gehört. Diese Steuereinheit 60 besteht im wesentlichen aus einem Prozessor 61, einem Empfangsregister 62, einem Senderegister 63, einem Kollisionsregister 64, einem Intervallobergrenzenregister 65, einem Zeitgenerator 66, einem Protokoll-Codespeicher 67, einem Zeitschlitzzähler 68 und einem Kollisionszähler 69. Der Prozessor 61 ist mit den in Fig. 5 gezeigten Einheiten 51 bis 53 und 56 bis 58 verbunden und steuert den gesamten Verfahrensabalauf des Zugriffs auf den Bus 50. Steuergrößen für diesen Verfahrensablauf erhält der Prozessor 61 aus den Einheiten 62 bis 69. Den Registern 62 bis 65 werden die in ihnen zu speichernden Informationen über den Prozessor 61 zugeführt. Außerdem wird der Zeitgenerator 66 von dem Prozessor 61 aus gesetzt. Der Protokoll-Codespeicher 67 kann z.B. das CSMA/CD-Protokoll für den Zugriff auf den Bus 50 enthalten.

Das Empfangsregister 62 speichert die Restpaketnummer des letzten von einer beliebigen Station des Nachrichtenübertragungsnetzes erfolgreich auf dem Bus 50 übertragenen Nachrichtenpakets. Der Anfangswert des Empfangsregisters 62 ist RE = 1, denn die erfolgreiche Übertragung einer Nachricht endet immer mit einem Nachrichtenpaket mit RPN = 1, und dann ist der Anfangszustand des Gesamtsystems erreicht. Das Senderegister 63 speichert die Restpaketnummer des ersten Nachrichtenpakets, das in dem Datenencoder 53 enthalten ist. Der Anfangswert dieses Registers ist RS = 0. Das Kollisionsregister 64 speichert die um 1 verringerte Restpaketnummer des letzten erfolgreich übertragenen Nachrichtenpakets, wenn eine Kollision auftritt, bzw. den Wert des Intervallobergrenzenregisters 65, wenn während einer Auflösungsphase eine Kollison auftritt. Sein Anfangswert ist RK = 0. Das Intervallobergrenzenregister 65 speichert für jeden aktuellen Zeitabschnitt einer Auflösungsphase die jeweilige maximale Restpaketnummer, der in diesem Zeitabschnitt ein Zugriff zum Bus 50 erlaubt ist. Nachdem eine Kollision auf dem Bus 50 provoziert wurde, werden also nacheinander in das Intervallobergrenzenregister 65 die Obergrenzen der Zeitabschnitte der Auflösungsphase geladen, die für in dem jeweiligen Zeitabschnitt auf den Bus 50 zugreifende Restpaketnummern vorgegeben sind.

Die Register 62 bis 65 werden beim Einschalten der jeweils betrachteten Station mit ihrem Anfangswert geladen. Dieser Anfangswert stellt sich ferner immer dann ein, wenn im gesamten Nachrichtenübertragungsnetz keine Nachricht zur Übertragung ansteht.

Da alle Stationen des Nachrichtenübertragungsnetzes zu jedem Zeitpunkt den Bus 50 abhören, sind die Inhalte aller Register 62 bis 65 mit Ausnahme des Senderegisters 63 in jeder Station identisch. Der Zeitgenerator 66 wird nach jeder erfolgreichen Übertragung und nach jeder Kollision neu gestartet. Am Zustand des Zeitgenerators 66 und den Inhalten der Register 62 bis 65 erkennt die Steuerung, ob sie für ihre Station eine Nachrichtenübertragung starten soll oder nicht. Der Zeitgenerator 66 erzeugt dabei Zeitschlitze, deren Dauer für ein Nachrichtenübertragungsnetz standardisiert sein kann und beispielsweise 51,2 µs beträgt.

Bei dem hier als Beispiel beschriebenen Kanalzugriffsverfahren wird die serielle Übertragung von Paketen einer Nachricht von einer Station aus durch einen Übertragungsversuch einer anderen sendewilligen Station mit der im Senderegister 63 gespeicherten Sendepaketnummer RS nicht unterbrochen, wenn RS im Bezug auf die Restpaketnummer RE des zuletzt auf dem Bus 50 gehörten Pakets, die im jeweiligen Empfangsregister 62 gespeichert ist, die Bedingung

$$RS \geqq RE - 1 \text{ oder } RE \leqq 3$$

erfüllt. Nachrichten, die nur noch 3 oder weniger Pakete zur Übertragung benötigen, werden also nicht unterbrochen. Wenn das in dem Datenencoder 53 einer sendewilligen Station anstehende Nachrichtenpaket jedoch die Bedingungen

$$RS < RE - 1 \text{ und } RE > 3$$

erfüllt, so wird mit der Übertragung dieses Nachrichtenpakets begonnen, sobald die Übertragung des auf dem Bus 50 gerade übertragenen Pakets beendet ist. Dadurch wird eine Kollision provoziert, und es beginnt die beschriebene Auflösungsphase, in der das Übertragungsrecht an die an der Kollision beteiligte Station vergeben wird, in der das Nachrichtenpaket mit der niedrigsten Restpaketnummer zur Übertragung ansteht.

Das Senden einer Nachricht von einer an ein Nachrichtenübertragungsnetz angeschlossenen Station wird veranlaßt, wenn die auf dem erfindungsgemäßen Verfahren beruhende Sendeberechtigung besteht. Für diese Sendeberechtigung ist eine der folgenden Bedingungen zu erfüllen:

1. Das letzte erfolgreich übertragene Nachrichtenpaket stammt von der sendewilligen Station.

2. Die zu sendende Restpaketnummer ist kleiner als die nächste auf dem Bus zu erwartende Restpaketnummer; es wird eine Kollision provoziert.

Dies bedeutet: $RS < RE-1$ und $RE > 3$

3. Eine Übertragung ist abgeschlossen, und es ist keine andere Nachricht von einer Kollision her bekannt.

Dies bedeutet: $RE = 1$ und $RK = 0$ (Anfangswerte)

4. Eine Übertragung ist abgeschlossen, und die Restpaketnummer, die in der sendewilligen Station zur Übertragung ansteht, ist kleiner oder gleich der Restpaketnummer einer von einer Kollision her bekannten Nachricht; es wird eine Kollision provoziert.

Dies bedeutet: $RE = 1$ und $RS \leqq RK$

5. Der Übertragungskanal ist trotz $RE > 1$ auch nach mehreren Zeitschlitzen noch unbelegt. Diese Bedingung betrifft fehlerhaftes Verhalten einer Station mit Sendeberechtigung, die aber nicht sendet. Diese Bedingung soll verhindern, daß der Übertragungskanal möglicherweise von keiner Station genutzt wird.

Als Bereichsobergrenzen von Restpaketnummern für vier Zeitabschnitte einer Auflösungsphase haben sich z.B. die folgenden Werte als günstig erwiesen:

$$B_1 = 1, B_2 = 3, B_3 = 7, B_4 = RK - 1$$

Die maximale Kollisionsanzahl ist dabei 15.

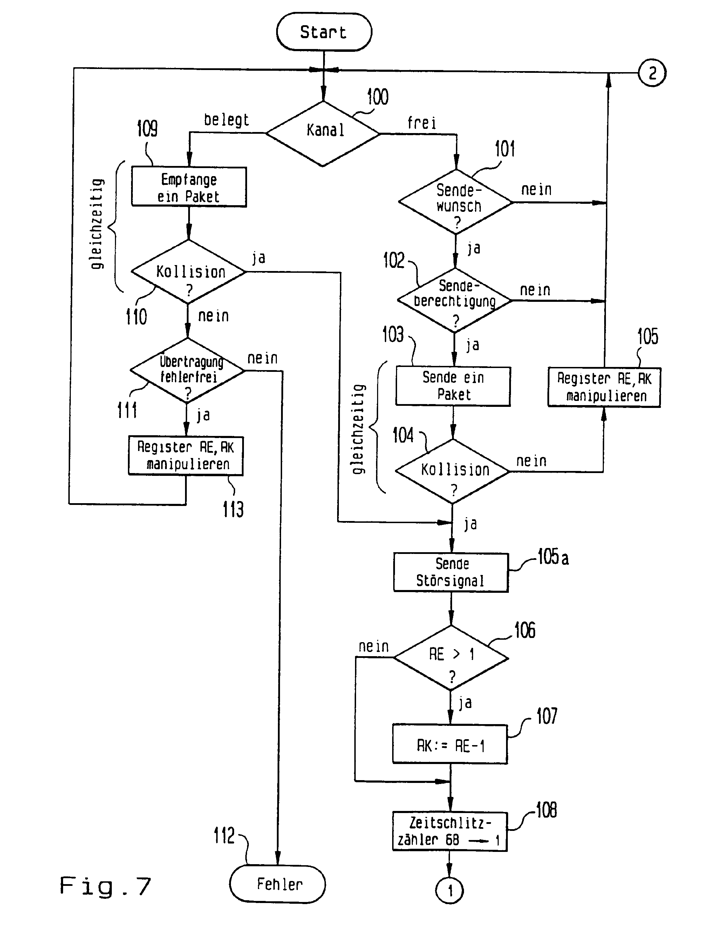

Anhand der Fig. 7 bis 10 wird im folgenden das Flußdiagramm der Funktionsabläufe in dem Prozessor 61 für das Kanalzugriffsverfahren erläutert.

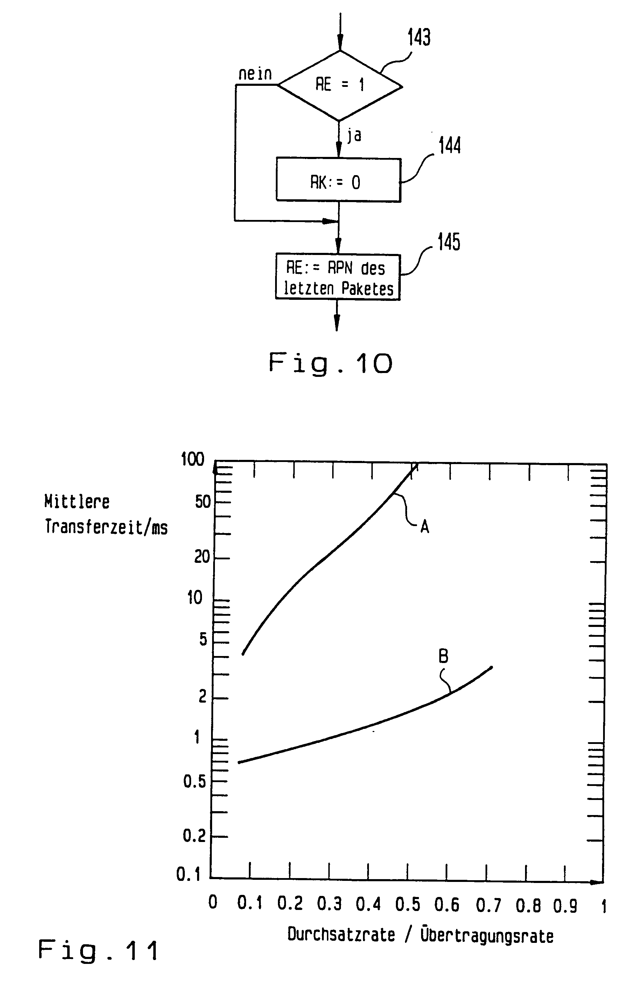

In Fig. 7 ist ein erster Abschnitt eines Kanalzugriffs dargestellt, dessen Verfahrensablauf mit der in Fig. 5 und 6 gezeigten Steuerung durchgeführt wird, wenn eine sendewillige Station den Übertragungskanal abhört. Nach dem Start des Verfahrensablaufs wird in einem ersten Schritt 100 geprüft, ob der Übertragungskanal frei oder belegt ist. Ist er frei, so wird in Schritt 101 geprüft, ob in der hier betrachteten Station ein Sendewunsch vorliegt. Ist dies nicht der Fall, so wird die Steuerung auf Schritt 100 zurückgeführt und die Schleife mit den Schritten 100 und 101 erneut durchlaufen. Sobald in Schritt 101 ein Sendewunsch festgestellt wird, erfolgt in Schritt 102 eine Prüfung der Sendeberechtigung. Liegt eine der oben genannten fünf Bedingungen für die Sendeberechtigung vor, so wird in Schritt 103 das Senden eines Nachrichtenpakets veranlaßt. Durch gleichzeitiges Abhören des Übertragungskanals wird in Schritt 104 geprüft, ob eine Kollision auf dem Übertragungskanal entstanden ist. Ist dies nicht der Fall, so werden nach der erfolgreichen Übertragung in Schritt 105 die Registerinhalte RE und RK (Fig. 6) in der in Fig. 10 dargestellten Weise manipuliert, d.h. sie werden auf den durch das in Schritt 103 abgesandte Nachrichtenpaket veränderten Zustand eingestellt. Anschließend wird die vorstehend beschriebene Routine beginnend mit dem Schritt 100 erneut durchlaufen.

Auf den Schritt 100 wird auch zurückgeführt, wenn in Schritt 102 festgestellt wurde, daß eine Sendeberechtigung nicht vorliegt.

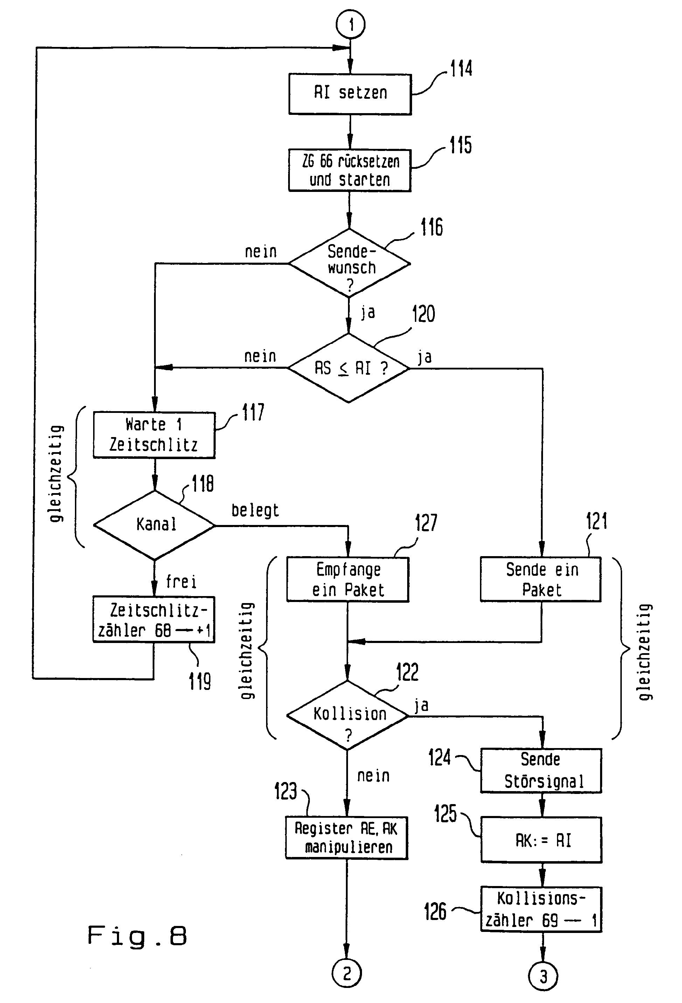

Wenn in Schritt 104 eine Kollision festgestellt wurde, so wird in Schritt 105a das Aussenden eines Störsignals von der hier betrachteten Station veranlaßt. Dadurch werden alle mit dem Übertragungskanal verbundenen Stationen über den Zustand der Kollision auf dem Übertragungskanal informiert und weitere Zugriffe auf diesen unterbunden. Anschließend wird in Schritt 106 geprüft, ob der Registerinhalt RE größer als 1 ist, d.h. ob eine Restpaketnummer eines über den Übertragungskanal empfangenen Nachrichtenpakets in dem Empfangsregister 62 (Fig. 6) enthalten ist, dessen Ausgangszustand den Wert 1 hat. Ist dies der Fall, so wird in Schritt 107 das Kollisionsregister 64 auf den Inhalt RK = RE - 1 gesetzt, d.h. er wird gegenüber dem Inhalt RE des Empfangsregisters 62 um 1 verringert. Es wird also die um 1 verringerte Restpaketnummer des letzten erfolgreich übertragenen Nachrichtenpakets gespeichert, weil in Schritt 104 eine Kollision festgestellt wurde. Zum Auflösen der Kollision wird dann in Schritt 108 der Zeitschlitzzähler 68 auf 1 gesetzt, und die Steuerung wird anschließend auf die in Fig. 8 gezeigten weiteren Schritte geführt.

Wurde in Schritt 106 festgestellt, daß der Inhalt RE des Empfangsregisters 62 die Restpaketnummer 1 enthält, so wird unmittelbar auf Schritt 108 übergegangen und die noch zu beschreibende Kollisionsauflösung veranlaßt.

Wenn in Schritt 100 festgestellt wird, daß der Übertragungskanal belegt ist, so wird in Schritt 109 der Empfang eines die Belegung verursachenden Nachrichtenpakets einer anderen Station veranlaßt und gleichzeitig in Schritt 110 geprüft, ob eine Kollision vorliegt, d.h. ob das empfangene Nachrichtenpaket an einer Kollision beteiligt ist. Ist dies der Fall, so wird unmittelbar auf Schritt 105 übergegangen und das Störsignal ausgesandt, worauf die beschriebenen Schritte 106 bis 108 folgen. Liegt keine Kollision vor, so wird nach der Übertragung in Schritt 111 geprüft, ob die Übertragung des empfangenen Nachrichtenpakets fehlerfrei war. Liegt ein Fehler vor, so wird dies in Schritt 112 signalisiert. Andernfalls wird in Schritt 113 eine Manipulation der Registerinhalte RE und RK veranlaßt (Fig. 10), worauf die Steuerung zu Schritt 100 zurückkehrt und die vorstehend beschriebenen Vorgänge erneut gestartet werden.

In Fig. 8 ist die Fortsetzung der mit den Schritten 105 bis 108 begonnenen Routine dargestellt. Anschließend an den Schritt 108 wird das Intervallobergrenzenregister 65 in Schritt 114 auf die Obergrenze eingestellt, die dem in Schritt 108 mit dem Zeitgenerator 66 eingestellten Zeitabschnitt der Auflösungsphase entspricht. Anschließend wird in Schritt 115 der Zeitgenerator 66 rückgesetzt und gestartet. Darauf folgt in Schritt 116 eine erneute Überprüfung, ob ein Sendewunsch vorliegt. Ist dies nicht der Fall, so wird in Schritt 117 eine Wartezeit eingelegt, um das Aussenden eines Nachrichtenpakets zeitlich so einzuordnen, daß der gegenseitige Paketabstand auf dem Übertragungskanal gewahrt bleibt. In Schritt 118 wird geprüft, ob der Übertragungskanal während des Zeitschlitzes frei oder belegt ist. Ist er frei, so wird in Schritt 119 der Zeitschlitzzähler 68 auf einen nächsten Zeitabschnitt der Auflösungsphase weitergeschaltet und die vorstehend beschriebene Routine mit Schritt 114 erneut gestartet.

Wenn in Schritt 116 ein Sendewunsch festgestellt wird, so wird in Schritt 120 geprüft, ob das Senderegister 63 der hier betrachteten Station einen Inhalt RS kleiner oder gleich dem Inhalt RI des Intervallobergrenzenregisters 65 hat. Es wird hier also geprüft, ob in dem Senderegister 63 die Restpaketnummer eines Nachrichtenpakets enthalten ist, das in dem durch die in dem Intervallobergrenzenregister 65 gespeicherte Intervallobergrenze definierten Zeitabschnitt übertragen werden darf. Ist dies nicht der Fall, so wird auf die beschriebenen Schritte 117 bis 119 übergegangen. Wenn ein solches Nachrichtenpaket vorliegt, so wird dessen Aussendung in Schritt 121 veranlaßt. Währennd des Sendens wird in Schritt 122 geprüft, ob auf dem Übertragungskanal eine Kollision vorliegt. Ist dies nicht der Fall, so wird in Schritt 123 eine Manipulation der Registerinhalte RE und RK veranlaßt (Fig. 10) und anschließend daran die Steuerung auf den Schritt 100 (Fig.7) zurückgeführt.

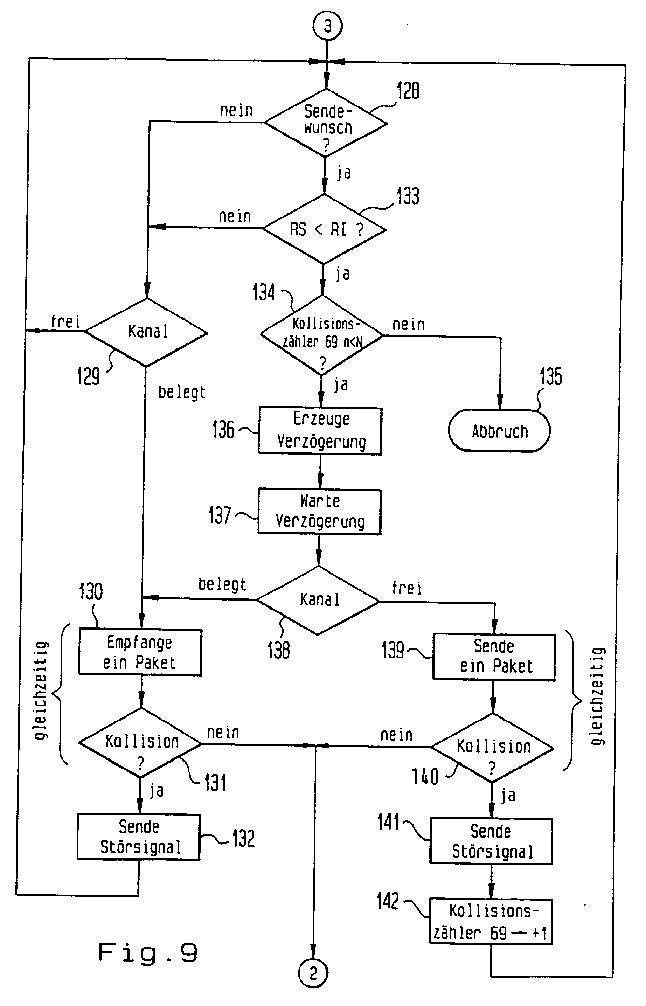

Wenn in Schritt 122 eine Kollision festgestellt wird, so wird in Schritt 124 ein Störsignal ausgesendet und in Schritt 125 der Inhalt RK des Kollisionsregisters 64 der hier betrachteten Station auf den Inhalt RI des Intervallobergrenzenregisters 65 gesetzt. Außerdem wird in Schritt 126 der Kollisionszähler 69 auf 1 gesetzt und dann auf den in Fig. 9 weiter dargestellten Verfahrensablauf übergegangen.

Wenn in Schritt 118 der Übertragungskanal als belegt festgestellt wurde, so wird in Schritt 127 der Empfang eines Nachrichtenpakets auf dem Übertragungskanal veranlaßt und in Schritt 122 gleichzeitig überprüft, ob eine Kollision eintritt. Darauf folgen die Schritte 123 oder 124 bis 126.

In Fig. 9 ist der Verfahrensablauf dargestellt, der sich an den Schritt 126 anschließt, in dem der Kollisionszähler 69 auf 1 gesetzt wurde. Anschließend daran wird in Schritt 128 geprüft, ob in der hier betrachteten Station ein Sendewunsch vorliegt. Liegt kein Sendewunsch vor, so wird in Schritt 129 geprüft, ob der Übertragungskanal frei oder belegt ist. Ist er frei, so wird die Steuerung auf Schritt 128 zurückgeführt und dieser erneut durchlaufen. Ist der Übertragungskanal belegt, so wird in Schritt 130 der Empfang eines Nachrichtenpakets veranlaßt und gleichzeitig in Schritt 131 geprüft, ob während des Sendens eine Kollision auftritt. Ist dies der Fall, so wird in Schritt 132 das Senden eines Störsignals veranlaßt und die Steuerung auf Schritt 128 zurückgeführt, wo erneut geprüft wird, ob ein Sendewunsch vorliegt.

Wenn in Schritt 128 ein Sendewunsch festgestellt wird, so wird in Schritt 133 geprüft, ob der Inhalt RS des Senderegisters 63 kleiner als der Inhalt RK des Kollisionsregisters 64 ist. Ist dies nicht der Fall, so wird auf Schritt 129 übergegangen und der Übertragungskanal auf Frei- oder Belegtzustand überprüft. Wenn der Inhalt RS kleiner als der Inhalt RK ist, so wird in Schritt 134 geprüft, ob der Kollisionszählerinhalt n kleiner als die höchstmögliche vorgegebene Kollisionszahl N ist. Wenn diese Zahl N erreicht ist, so wird in Schritt 135 das Zugriffsverfahren abgebrochen. Wenn der Inhalt des Kollisionszählers 69 kleiner als die höchstmögliche vorgegebene Kollisionszahl N ist, so wird in Schritt 136 mit einem Zufallsgenerator eine Verzögerungszeit erzeugt, in der die aufgetretenen Kollisionen nach einem Auflösungs-Algorithmus aufgelöst werden können, und in Schritt 137 das Abwarten dieser Verzögerungszeit veranlaßt. Anschließend wird in Schritt 138 wiederum geprüft, ob der Übertragungskanal belegt oder frei ist. Ist er belegt, so entspricht dies dem in Schritt 129 ggf. festgestellten Belegtzustand, so daß dann die Schritte 130 bis 132 durchgeführt werden können. Ist er frei, so wird in Schritt 139 das Senden eines Nachrichtenpakets von der hier betrachteten Station veranlaßt. In Schritt 140 wird gleichzeitig geprüft, ob auf dem Übertagungskanal eine Kollision entstanden ist. Ist dies während der Übertragung nicht der Fall, so entspricht dies dem gleichen Ergebnis aus Schritt 131, und die Steuerung wird auf Schritt 100 (Fig. 7) zurückgeführt. Ist eine Kollision aufgetreten, so wird in Schritt 141 das Störsignal veranlaßt und in Schritt 142 der Inhalt des Kollisionszählers 69 um 1 erhöht. Anschließend wird die Steuerung auf Schritt 128 zurückgeführt, um das Vorliegen eines Sendewunsches zu überprüfen.

In Fig. 10 ist die Funktion des Manipulierens der Registerinhalte RE und RK dargestellt. Das Manipulieren dieser beiden Register besteht darin, daß zunächst in einem Schritt 143 geprüft wird, ob der Inhalt RE des Empfangsregisters 62 dessen Anfangszustand entspricht, d.h. ob dieser Inhalt 1 ist. Ist dies der Fall, so wird in Schritt 144 der Inhalt RK des Kollisionsregisters 64 auf 0 gesetzt und anschließend in Schritt 145 der Inhalt RE des Empfangsregisters 62 auf die Restpaketnummer des soeben erfolgreich über den Übertragungskanal empfangenen Nachrichtenpakets gesetzt.

Wenn in Schritt 143 festgestellt wurde, daß das Empfangsregister 62 nicht in seinem Anfangszustand ist, so wird unmittelbar auf den Schritt 145 übergegangen, in dem der Inhalt des Empfangsregisters 62 auf den jeweils aktuellen Stand gebracht wird.

In Figur 11 ist grafisch ein Vergleich der mittleren Transferzeiten für eine typisches Nachrichtengemisch dargestellt, um den mit der Erfindung erzielbaren Verkürzungseffekt zu verdeutlichen. Die mittleren Transferzeiten sind abhängig von der Verkehrsbelastung des Übertragungskanals, d.h. von dem Verhältnis Durchsatzrate/Übertragungsrate, dargestellt. Die obere Kurve A ergibt sich bei Anwendung des CSMA/CD-Standardprotokolls. Es ist zu erkennen, daß bei einer Variation der Verkehrsbelastung von 0,1 bis 0,5 mittlere Transferzeiten von etwa 5 bis 80 ms auftreten. Werden die Kanalzugriffe hingegen mit den erfindungsgemäß vorgesehenen Verfahrensschritten durchgeführt, so ergeben sich in dem angegebenen Bereich gemäß Kurve B wesentlich verkürzte mittlere Transferzeiten von etwa 0,8 bis 1,8 ms.

## Patentansprüche

1. Kanalzugriffsverfahren für ein als Bussystem konfiguriertes lokales Übertragungsnetz für Nachrichten mit Paketeinteilung ohne zentrale Steuerung, bei dem jede sendewillige Station den Übertragungskanal abhört und abhängig vom Zustand des Übertragungskanals ihre Nachricht absetzt, und bei dem im Falle einer Kollision von Nachrichten auf dem Übertragungskanal eine Unterbrechung der Nachrichtenübertragung und eine Kollisionsauflösung in einer Auflösungsphase erfolgt, dadurch **gekennzeichnet,** daß die Pakete in einer der zunehmenden Restlänge bzw. Restausgabezeit entsprechenden Reihenfolge übertragen werden, und daß die mit Ende einer Kollision beginnende Auflösungsphase aus gegebenenfalls mehreren Zeitabschnitten besteht, in denen jeweils die Übertragung für die Pakete von Nachrichten vorbestimmter Länge bzw. Restausgabezeit freigegeben wird.

2. Verfahren nach Anspruch 1, dadurch **gekennzeichnet,** daß die in der jeweiligen Station vorliegenden Nachrichten hinsichtlich ihrer Restlänge bzw. Restausgabezeit geordnet werden.

3. Verfahren nach Anspruch 1 oder 2 für eine paketorientierte Nachrichtenübertragung, dadurch gekennzeichnet, daß zur Darstellung der Restlänge bzw. Restausgabezeit die Pakete einer jeden Nachricht fortlaufend mit einer Restpaketnummer versehen werden, die die Zahl der insgesamt noch zu übertragenden Pakete dieser Nachricht angibt.

4. Verfahren nach Anspruch 3, dadurch **gekennzeichnet,** daß bei Feststellen einer laufenden Übertragung durch eine sendewillige Station die in dieser Station vorliegende Nachricht abgesetzt wird, sofern deren Restpaketnummer kleiner als die Restpaketnummer des nächsten erwarteten Pakets der laufenden Übertragung ist.

5. Verfahren nach Anspruch 4, dadurch **gekennzeichnet,** daß das Absetzen der Nachricht beginnt, wenn die laufende Übertragung eines Nachrichtenpakets abgeschlossen ist.

6. Verfahren nach einem der Ansprüche 3 bis 5, dadurch **gekennzeichnet,** daß die Zeitabschnitte der Auflösungsphase mehreren Bereichen von Restpaketnummern zugeordnet sind.

7. Verfahren nach Anspruch 6, dadurch **gekennzeichnet,** daß der erste Zeitabschnitt der Restpaketnummer 1 zugeordnet ist.

8. Verfahren nach einem der Ansprüche 3 bis 7, dadurch **gekennzeichnet,** daß die Zahl der Zeitabschnitte der Auflösungsphase und/oder die Obergrenze des jeweiligen Bereichs von Restpaketnummern entsprechend der Verkehrslast des Übertragungsnetzes eingestellt werden.

9. Verfahren nach einem der Ansprüche 3 bis 8, dadurch **gekennzeichnet,** daß die Zahl der Zeitabschnitte der Auflösungsphase und/oder die Obergrenze des jeweiligen Bereichs von Restpaketnummern abhängig von der Paketnummer des letzten störungsfrei übertragenen Pakets eingestellt werden.

10. Verfahren nach einem der vorhergehenden Ansprüche, dadurch **gekennzeichnet,** daß die Unterbrechung der Nachrichtenübertragung nur für Nachrichten mit einer vorbestimmten Mindest-Restnachrichtenlänge bzw. Mindest-Restausgabezeit erfolgt.

11. Verfahren nach Anspruch 10, dadurch **gekennzeichnet,** daß die Unterbrechung nur für Nachrichten mit einer Restpaketnummer größer als 3 erfolgt.

12. Verfahren nach einem der vorhergehenden Ansprüche, dadurch **gekennzeichnet,** daß nach der erfolgreichen Übertragung eines Nachrichtenpakets ein Kanalzugriff unabhängig von der Restlänge bzw. Restausgabezeit dieser Nachricht erfolgt, wenn der Übertragungskanal für eine vorbestimmte Zeit unbelegt bleibt.

## Claims

1. Channel access process for a local transmission network in bus system configuration for messages with packet segmentation without central control in which each station able to transmit monitors the transmission channel and, depending on the state of the transmission channel, enters its message and with which, in case of a collision of messages on the transmission channel, an interruption of the message transmission and a collision resolution take place in a resolution phase, <u>characterized</u> in that the packets are transmitted in a sequence corresponding to the increasing residual length or residual output time and in that the resolution phase starting with the end of a collision consists of possibly several time segments in each of which the transmission for the packets of messages of predetermined length or residual output time is released.

2. Process in accordance with Claim 1, <u>characterized</u> in that the messages present in the respective station are sorted with respect to the residual length or residual output time.

3. Process in accordance with Claim 1 or 2 for a packet-oriented message transmission, <u>characterized</u> in that in order to illustrate the residual length or residual output time, the individual message packets are continuously provided with a residual packet number which indicates the number of the total number of packets of this message still to be transmitted.

4. Process in accordance with Claim 3, <u>characterized</u> in that upon detection of an ongoing transmission through a station able to transmit the message present in this station is entered inasmuch as its residual packet number is smaller than the residual packet number of the next expected packet of the ongoing transmission.

5. Process in accordance with Claim 4, <u>characterized</u> in that the entering of the message begins when the ongoing transmission of a message packet is ended.

6. Process in accordance with any one of claims 3 to 5, <u>characterized</u> in that the time segments of the resolution phase are assigned to several ranges of residual packet numbers.

7. Process in accordance with Claim 6, <u>characterized</u> in that the first time segment of the residual packet number is assigned to 1.

8. Process in accordance with any one of claims 3 to 7, <u>characterized</u> in that the number of the time segments of the resolution phase and/or the upper limit of the respective range of residual packet numbers is set in accordance with the traffic load of the transmission network.

9. Process in accordance with any one of claims 3 to 8, <u>characterized</u> in that the number of time segments of the resolution phase and/or the upper limit of the respective range of residual packet numbers are adjusted in accordance with the packet number of the last packet transmitted without interference.

10. Process in accordance with any one of the foregoing claims, <u>characterized</u> in that the interruption of the message transmission takes place only for messages with a predetermined minimum residual message length or minimum residual output time.

11. Process in accordance with Claim 10, <u>characterized</u> in that the interruption takes place only for messages with a residual packet number greater than 3.

12. Process in accordance with any one of the foregoing claims, <u>characterized</u> in that following the successful transmission of a message packet, a channel access takes place independently of the residual length or residual output time of this message when the transmission channel remains unoccupied for a predetermined time.

## Revendications

1. Procédé d'accès aux canaux pour un réseau local de transmission configuré comme un système de bus pour messages avec division en paquets sans commande centrale, dans lequel chaque poste souhaitant émettre écoute le canal de transmission et délivre son message en fonction de l'état du canal de transmission, et dans lequel, en cas de collision de messages, il se produit sur le canal de transmission une interruption de la transmission des messages et une résolution de collision dans une phase de résolution, caractérisé en ce que les paquets sont transmis selon une séquence correspondant à la longueur résiduelle croissante ou au temps de sortie résiduel croissant, et en ce que la phase de résolution commençant avec la fin d'une collision se compose de plusieurs périodes, éventuellement à l'intérieur desquelles la transmission est à chaque fois validée pour les paquets de messages de longueur prédéterminée ou de temps de sortie résiduel prédéterminé.

2. Procédé suivant la revendication 1, caractérisé en ce que les paquets se trouvant dans le poste respectif sont classés du point de vue de leur longueur résiduelle ou de leur temps de sortie résiduel.

3. Procédé suivant la revendication 1 ou 2 pour une transmission de messages par paquets, caractérisé en ce que, pour la représentation de la longueur résiduelle ou du temps de sortie résiduel, les paquets de chaque message sont munis en continu d'un numéro de paquet résiduel qui indique le nombre des paquets de ces messages qui restent à transmettre au total.

4. Procédé suivant la revendication 3, caractérisé en ce que, lors de la constatation d'une transmission en cours par un poste souhaitant émettre, le message présent dans ce poste est délivré dans la mesure où son numéro de paquet résiduel est inférieur au numéro de paquet résiduel du paquet suivant attendu de la transmission en cours.

5. Procédé selon la revendication 4, caractérisé en ce que la délivrance du message commence quand la transmission en cours d'un paquet de message est terminée.

6. Procédé suivant l'une des revendications 3 à 5, caractérisé en ce que les périodes de la phase de résolution sont affectées à plusieurs zones de numéros de paquet résiduel.

7. Procédé suivant la revendication 6, caractérisé en ce que la première période est affectée au numéro de paquet résiduel 1.

8. Procédé suivant l'une des revendications 3 à 7, caractérisé en ce que le nombre des périodes de la phase de résolution et/ou la limite supérieure de la zone respective des numéros de paquets résiduels sont réglés conformément à l'encombrement du réseau de transmission.

9. Procédé suivant l'une des revendications 3 à 8, caractérisé en ce que le nombre des périodes de la phase de résolution et/ou la limite supérieure de la zone respective des numéros de paquets résiduels sont réglés en fonction du numéro de paquet du dernier paquet transmis sans perturbation.

10. Procédé suivant l'une des revendications précédentes, caractérisé en ce que l'interruption de la transmission de messages n'intervient que pour des messages ayant une longueur minimale prédéterminée de messages résiduels ou un temps de sortie résiduel minimal prédéterminé.

11. Procédé suivant la revendication 10, caractérisé en ce que l'interruption n'intervient que pour les messages ayant un numéro de paquet résiduel supérieur à 3.

12. Procédé suivant l'une des revendications précédentes, caractérisé en ce que, après la transmission réussie d'un paquet de messages, un accès aux canaux s'effectue indépendamment de la longueur résiduelle ou du temps de sortie résiduel de ce message quand le canal de transmission demeure inoccupé pendant une durée prédéterminée.

12   1'   10   2'   3'   4'   5'   6'   13

1   2   3   4   5   6

# Fig.1

1 sendet      3 erkennt       3 sendet
              "belegt"

Δt

Kollisionsfenster

Paketübertragungszeit

# Fig.2

1 sendet      2 sendet      1 erkennt         1 hört
                            Kollision

Δt

Kollisions-          Stör-      Auflösung
fenster              Signal

# Fig.3

EP 0 443 003 B1

$S_2$: RPN 28    $S_3$: RPN 1    $S_1, S_3$    $S_4$: RPN 6    $S_1, S_4$    $S_6$: RPN 2    $S_4, S_5, S_6$    $S_5, S_6$

$S_5$: RPN 3

=1    =1    ≤3    ≤7    =1    ≤3

$S_1$: RPN 22 | $S_1$: RPN 21 | | $S_3$: RPN 1 | | | | $S_4$: RPN 6 | $S_4$: RPN 5 | | | | $S_5$: RPN 3

t

belegt    Koll.    belegt    Koll.    frei    frei    belegt    Koll.    frei    Koll.    belegt

Paketende    Auflösungsphase    Auflösungsphase

tz    2tz    tz    tz    tz    2tz    2tz    tz    tz    tz    t

Fig.4

Fig.5

Fig.6

Fig.7

Fig.8

Fig.9

EP 0 443 003 B1

Fig. 10

Mittlere
Transferzeit/ms

Durchsatzrate / Übertragungsrate

Fig. 11

20